# EUROPÄISCHE PATENTANMELDUNG

(11) **EP 0 538 775 A1**
(43) Veröffentlichungstag der Anmeldung: **28.04.1993**
(21) Anmeldenummer: 92117892.7
(22) Anmeldetag: 20.10.1992
(51) Int. Cl.: B65G 49/06

(54) **Vorrichtung zum Umsetzen von Tafeln**

(30) Priorität: 24.10.1991 DE 4135045
(71) Anmelder: Torgauer Maschinenbau GmbH, D-04860 Torgau (DE)
(72) Erfinder: Weber, Hans-Joachim, O-7290 Torgau (DE)
(74) Vertreter: Türk, Gille, Hrabal, Leifert

(57) **Zusammenfassung**

Es ist eine Vorrichtung zum Umsetzen von Glasscheiben von einem aus einer Mehrzahl von aufrechtstehenden Glasscheiben bestehenden Block auf eine horizontale Transporteinrichtung offenbart, die einen mit Saugern versehenen Greifer zum Erfassen und Umsetzen einzelner Tafeln aufweist. Der Greifer ist rahmenförmig ausgebildet und hat mehrere Sauger, von denen einige über die Grundfläche des Greifers verstellbar gelagert sind. Der Greifer ist um eine horizontale Achse verschwenkbar an zwei Armen gelagert, die ihrerseits um eine horizontale Achse verschwenkbar sind.

## Beschreibung

Die Erfindung betrifft eine Vorrichtung zum Umsetzen von Tafeln wie Glasscheiben, beispielsweise von einem aus einer Mehrzahl von etwa aufrechtstehenden Tafeln bestehenden Block auf eine horizontale Transporteinrichtung, wobei die Vorrichtung einen Sauger aufweisenden Greifer zum Erfassen und Umsetzen der einzelnen Tafeln aufweist.

Bei der Weiterverarbeitung von Glasscheiben ist es bekannt, eine Mehrzahl von Glasscheiben beispielsweise auf Paletten mehr oder weniger senkrecht stehend einer Verarbeitungsanlage anzuliefern und die Glasscheiben dann einzeln von dem Block abzunehmen und auf eine Transporteinrichtung wie einen Transporttisch abzulegen, um sie einzeln nacheinander weiteren Bearbeitungsstufen zuzuführen.

Dabei ist es bekannt, die jeweils vorderste Glasscheibe eines aus einer Mehrzahl von Glasscheiben bestehenden Blockes mit einem Greifer, der Sauger oder Saugnäpfe aufweist, zu ergreifen und von dem Block abzuheben, um sie vom Block auf die Transporteinrichtung umzusetzen. Die Sauger müssen dabei aber, um die Glasscheiben sicher zu erfassen, in ihrer Position auf die jeweilige Größe bzw. das jeweilige Format der umzusetzenden Glasscheiben abgestellt sein. Soll eine Anlage zur Verarbeitung bzw. Weiterbehandlung von Glasscheiben auf ein anderes Format der Glasscheiben bzw. eine andere Größe von Glasscheiben umgestellt werden, ist es bisher erforderlich, den Greifer zum Umrüsten auszutauschen, damit Glasscheiben unterschiedlicher Formate optimal erfaßt und umgesetzt werden können. Das setzte bisher eine Umrüstung der Vorrichtung voraus, die mit einem Austausch des Greifers verbunden ist, weil für jedes Glasscheiben-Format ein besonderer Greifer benötigt wird. Dadurch entstehen nicht nur verhältnismäßig hohe Kosten für die Anschaffung und Lagerhaltung von Greifern für unterschiedliche Formate, sondern auch verhältnismäßig hohe Umrüstzeiten, die eine zu Betriebsunterbrechungen der gesamten Verarbeitungsanlage und damit zu erhöhten Produktionskosten führen.

Ein weiteres Problem beim Umsetzen von Glasscheiben aus einem beispielsweise auf einer Palette angelieferten Block von Glasscheiben besteht darin, daß aufeinanderfolgende bzw. aufeinanderliegende oder aneinanderliegende Glasscheiben sozusagen aneinander kleben oder haften können, beispielsweise weil sich zwischen ihnen zumindest stellenweise Wasser, Öl oder ein sonstiges Haftmittel befindet, so daß beim Abheben der vordersten oder obersten Glasscheibe von einem Scheiben-Block eine zweite Glasscheibe mitgenommen werden kann. Das ist für die Vereinzelung der Glasscheiben unerwünscht. Beim Umsetzen fällt die zweite Scheibe leicht ab und kann zu Bruch gehen. Dadurch wird die Verarbeitungsanlage gestört und muß gereinigt werden, was zusätzliche Stillstandszeiten bedingt.

Schließlich besteht bei den bekannten Vorrichtungen zum Umsetzen von Glasscheiben aus einem angelieferten Block auf eine Transporteinrichtung der Nachteil, daß die Vorrichtung ein Umsetzen von Glasscheiben von Hand, was gelegentlich zweckmäßig und notwendig sein kann, behindert, weil die bekannte Umsetz-Vorrichtung den für das Umsetzen der Glasscheiben von Hand benötigten Raum beeinträchtigt.

Der Erfindung liegt die Aufgabe zugrunde, eine Vorrichtung zum Umsetzen von Tafeln wie Glasscheiben zu schaffen, welche in einem Block angelieferte Glasscheiben aus diesem Block umsetzen und auf eine Transporteinrichtung einzeln abgeben kann, wobei Tafeln unterschiedlicher Formate oder Größen nacheinander ohne längere Umrüstzeiten umgesetzt werden können und wobei sichergestellt ist, daß die im Block angelieferten Tafeln wie Glasscheiben beim Umsetzen vereinzelt werden, ohne daß unerwünscht Tafeln mitgenommen werden und abfallen und damit zu Bruch gehen können.

Diese Aufgabe wird mit einer Vorrichtung der eingangs genannten Gattung gelöst, welche die Merkmale des kennzeichnenden Teiles des Patentanspruches 1 aufweist. Vorteilhafte Ausgestaltungen der Erfindung sind Gegenstand der Unteransprüche.

Bei der erfindungsgemäßen Vorrichtung ist der Greifer derart ausgebildet, daß zumindest ein Teil seiner Sauger verstellbar ist, um diese an die jeweiligen Formate der umzusetzenden Tafeln wie Glasscheiben in optimaler Weise anpassen zu können. Dabei ist vorzugsweise jedem Sauger ein Sensor wie eine Lichtschranke zugeordnet, um die Betätigung jedes Saugers nur dann auszulösen, wenn dieser auch einer umzusetzenden Tafel gegenüberliegt. Die Sauger selbst sind bekannter Konstruktion, können jedoch auch gegenüber bekannten Saugern abgewandelt sein, ohne dadurch die Erfindung zu verändern.

Die erfindungsgemäße Vorrichtung kann auch derart betätigt werden, daß die in einem Block mehr oder weniger aufrechtstehend angelieferten einzelnen Tafeln wie Glasscheiben vor dem Abnehmen der vordersten oder auch obersten Tafel wie Glasscheibe mittels auf deren Oberkanten oder Außenkanten einwirkender Blasluft sozusagen aufgefächert und damit vereinzelt werden, um zu verhindern, daß mit der vordersten oder obersten Tafel weitere an dieser haftende Tafeln oder Glasscheiben abgehoben werden können, die im Laufe des Umsetzvorganges herabfallen und dabei zu Bruch gehen können.

Die erfindungsgemäße Vorrichtung ist auch in der Lage, von dem Greifer erfaßte und hochgehobene Tafeln wie Glasscheiben wieder abzusetzen, wenn ein Sensor festgestellt hat, daß nicht nur eine Tafel wie eine Glasscheibe abgehoben worden ist, bevor die zusätzlich angehobene Tafel oder Glasscheibe herabfällt und zu Bruch geht. Zu diesem Zweck kann die Vorrichtung so gesteuert werden, daß nach dem anfänglichen Abheben bzw. Lüften der obersten oder vordersten Scheibe diese wieder an den als Stapel ausgebildeten Block zurückgesetzt wird, wenn eine zweite Tafel oder Scheibe mitgenommen wurde. Das Anheben und Absetzen kann dabei mehrfach wiederholt werden, wobei die Vorrichtung schließlich zum Stillstand kommen kann, wenn die unerwünscht mitgenommene weitere Tafel oder Glasscheibe nicht von selbst abgefallen ist, um eine Korrektur von Hand vornehmen zu können.

Außerdem ermöglicht es die erfindungsgemäße Vorrichtung, einzelne Tafeln wie Glasscheiben von dem beispielsweise auf einer Palette angelieferten Block von Hand abzunehmen und auf die Transporteinrichtung umzusetzen, weil der Greifer der erfindungsgemäßen Vorrichtung derart verschwenkt oder umgesetzt werden kann, und daß er sich völlig außerhalb der Übergabe- oder Umsetzposition befindet.

Diese und weitere Vorteile und die dazu führenden Merkmale und Maßnahmen sind in der nachfolgenden Zeichnungsbeschreibung näher erläutert.

In der Zeichnung ist ein Ausführungsbeispiel einer erfindungsgemäßen Vorrichtung zum Umsetzen von Tafeln wie Glasscheiben schematisch dargestellt, und zwar zeigt
- Fig. 1: eine Seitenansicht der Vorrichtung, wobei sich der Greifer in aufrechter Position befindet, in welcher von einem Block aufrechtstehender Tafeln wie Glasscheiben die vorderste Tafel abgenommen werden kann,
- Fig. 2: eine schaubildliche Ansicht der Vorrichtung ohne den daran angebrachten Greifer,

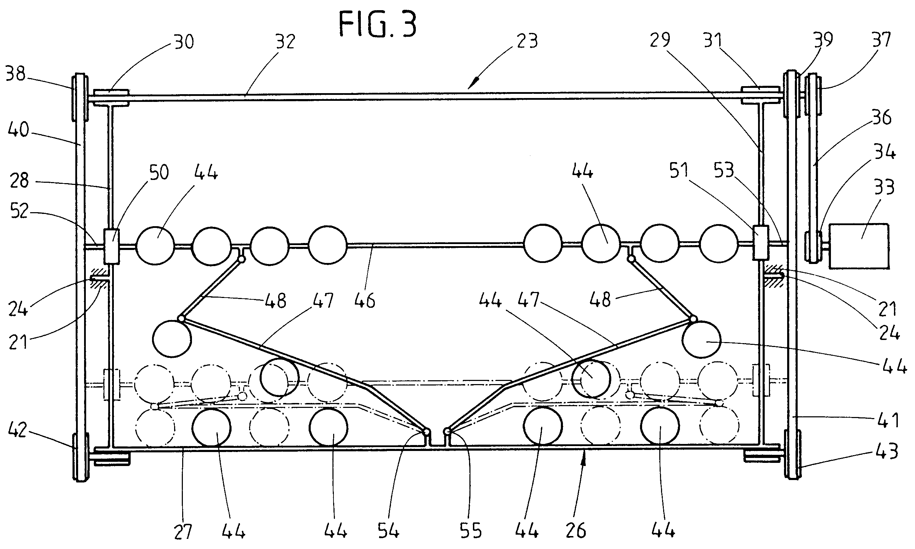

- Fig. 3.: eine Stirnansicht des Greifers, woraus die Verstellbarkeit eines Teiles der Sauger erkennbar ist, und
- Fig. 4: eine Seitenansicht der Vorrichtung, wobei sich der Greifer in Ruheposition befindet.

Die in der Zeichnung gezeigte Vorrichtung hat einen Sockel 1, der in horizontaler Richtung auf einem fest installierten Gestell 2 begrenzt verschiebbar ist, wie ein Doppelpfeil 3 andeutet. Der Sockel 1 ist mit Lagern 4 auf dem stangenförmig ausgebildeten Gestell 2 abgestützt.

Auf dem Sockel 1 sind in Stehlagern 5 und 6 zwei Arme 7 und 8 verschwenkbar gelagert, wie durch Doppelpfeile 9 angedeutet ist. Diese Arme 7 und 8 sind am unteren Ende von einer sich zwischen den Stehlagern 5 und 6 erstreckenden Achse 10 und am äußeren bzw. freien Ende von einer weiteren Achse 11 untereinander verbunden, so daß sie stets gemeinsam und synchron zueinander verschwenkt werden.

Als Antrieb zum Verstellen der Arme ist auf jedem der Arme 7 und 8 je ein hydraulischer Zylinder 12 bzw. 13 befestigt, dessen Kolbenstange 14 bzw. 15 an beiden Enden aus dem Zylinder herausragt und gemäß einem Doppelpfeil 16 hin und her geschoben werden kann.

An beiden Enden 17 und 18 jeder Kolbenstange 14 bzw. 15 ist eine Kette 19 angeschlossen, die gespannt über ein am unteren Ende jedes Armes 7 bzw. 8 befestigtes Ketten-Rad 20 und ein am entgegengesetzten Ende jedes Armes 7 bzw. 8 befestigtes weiteres Ketten-Rad 21 gelegt ist. Das Rad 21 hat dabei einen geringeren Durchmesser als das Rad 20. Bei Betätigung der hydraulischen Zylinder 12 und 13 verfahren die Kolbenstangen 14 und 15 in der einen oder anderen Richtung, wodurch über die gespannte Kette 19 sowohl das Rad 20 als auch das Rad 21 jedes Armes 7 und 8 um dessen horizontale Achse gedreht wird, wie durch einen Doppelpfeil 22 angedeutet. Da das Rad 20 einen größeren Durchmesser als das Rad 21 hat, führt eine Verstellung oder Verschiebung der Kolbenstangen 14 und 15 zu einer größeren Winkelbewegung oder Drehung des Rades 21 als des Rades 20.

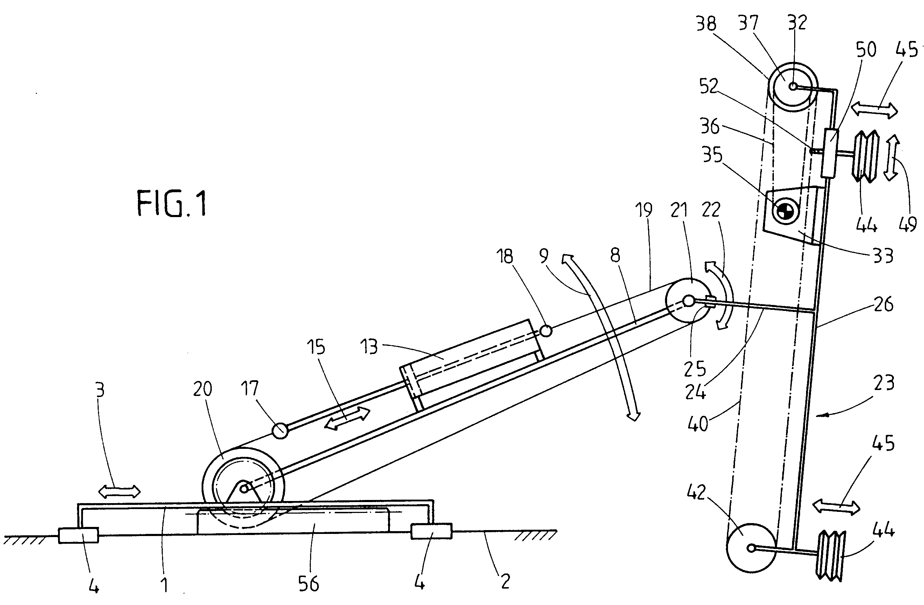

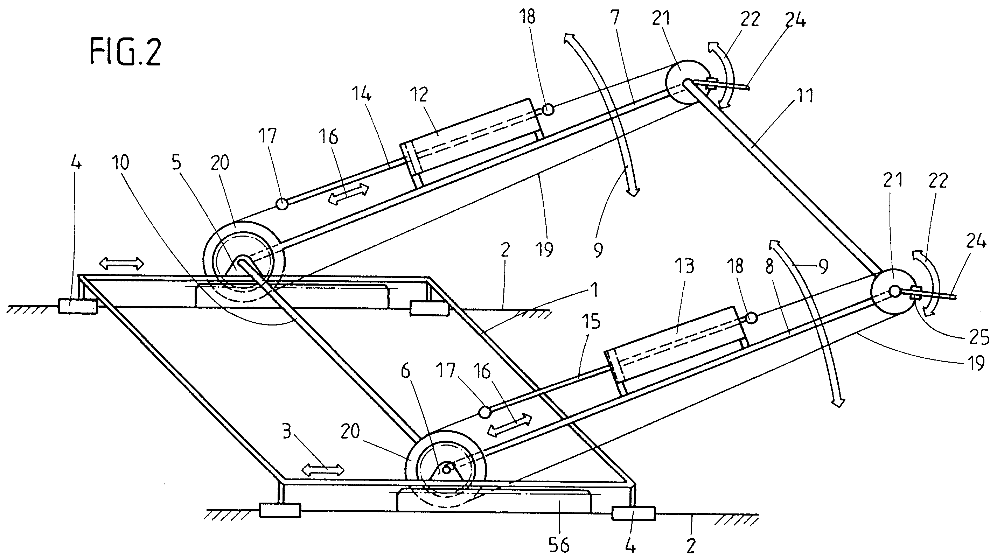

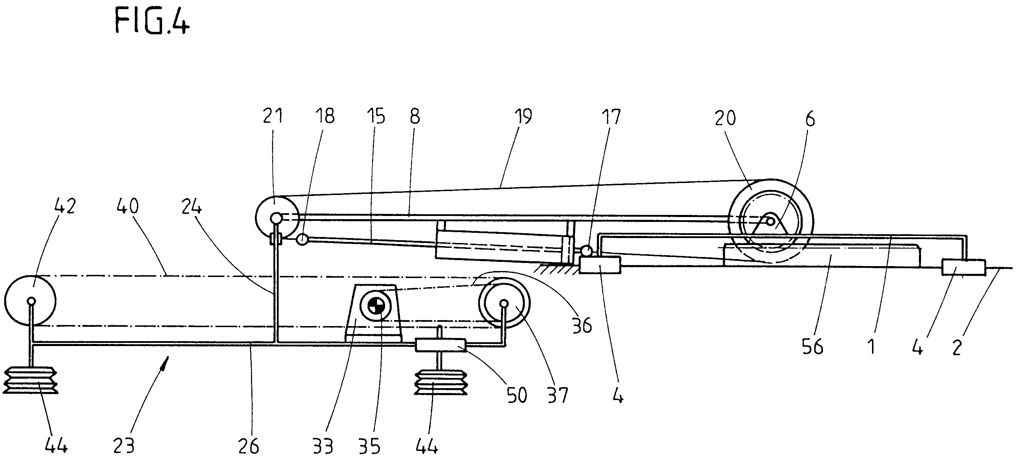

In der Position gemäß Fig. 1 und 2 befinden sich die unteren Enden 17 der Kolbenstangen 14 und 15 nahe den Ketten-Rädern 20, so daß die Arme 7 und 8 etwa in ihre höchstmögliche Position hochgeschwenkt sind. Bei der Anordnung gemäß Fig. 4 befinden sich hingegen die oberen Enden 18 der Kolbenstangen 14 und 15 nahe den Ketten-Rädern 21, so daß die Arme 7 und 8 nunmehr ihre tiefste Position, in der sie etwa waagerecht liegen, einnehmen.

An den Rädern 21 ist ein rahmenförmiger Greifer 23 um die Achse 11 verschwenkbar gelagert, so daß er aus der in Fig. 1 gezeigten, etwa senkrechten Position in die in Fig. 4 gezeigte, etwa waagerechte Position und umgekehrt verstellt werden kann. Zu diesem Zweck ist an jedem Rad 21 ein Tragarm 24 für den Greifer 23 befestigt, wobei jeder Tragarm mittels einer Halterung 25 drehfest mit dem betreffenden Ketten-Rad 21 verbunden ist.

Der Greifer 23 weist einen Rahmen 26 mit einem unteren feststehenden Querholm 27 und zwei seitlichen Längsholmen 28 und 29 auf. Am oberen Ende der Längsholme 28 und 29 ist in dort befindlichen Lagern 30 und 31 eine Welle 32 drehbar gelagert, die von einem Antriebsmotor 33 gedreht werden kann. Zu diesem Zweck ist auf der Antriebswelle 34 des Antriebsmotors 33 ein Antriebsrad 35 für einen Zahnriemen 36 befestigt, wobei der Zahnriemen 36 auch über ein Zahnriemenrad 37 läuft, das drehfest auf der Welle 32 angeordnet ist.

Auf der Welle 32 sind beidseits des Rahmens 26 weitere Zahnriemenräder 38 und 39 befestigt, über die jeweils ein weiterer Zahnriemen 40 bzw. 41 gelegt ist, der außerdem über ein am unteren Querholm 27 des Rahmens 26 drehbar gelagertes weiteres Zahnriemenrad 42 bzw. 43 gelegt ist.

An dem leistenförmig ausgebildeten Querholm 27 des Rahmens 26 sind in einer Reihe insgesamt vier Sauger 44 unverrückbar befestigt, jedoch können diese balgförmig ausgebildeten Sauger 44 in deren Längsrichtung ausgedehnt oder zusammengezogen werden, wie durch einen Doppelpfeil 45 in Fig. 1 angedeutet ist.

Innerhalb des Rahmens ist außerdem eine verschiebbare Leiste 46 gelagert, die in einer Reihe insgesamt acht weitere Sauger 44 trägt. Diese Leiste ist über Schwenkarme 47 und 48 mit dem Querholm 27 verbunden. Die beiden Schwenkarme 47 stützen jeweils zwei weitere Sauger 44 ab, die, wenn die Leiste 46 in ihre unterste Position zurückgefahren ist, sich zwischen die am Querholm befestigten Sauger 44 legen können, so daß alle sechzehn Sauger sich dann in einer Doppelreihe nahe dem Querholm 27 in Ruheposition befinden. In Fig. 1 ist durch einen weiteren Doppelpfeil 49 angedeutet, daß die an der Leiste 46 befindlichen Sauger 44 nicht nur gemäß Doppelpfeil 45 gedehnt oder zusammengezogen werden können, sondern sich auch über die Grundfläche des Rahmens 26 verschieben bzw. bewegen lassen.

Die Leiste 46 ist nach einer Art Parallelführung zwischen den seitlichen Längsholmen 28 und 29 des Rahmens 26 verschiebbar gelagert. Zu diesem Zweck ist an jedem Ende der Leiste 46 ein Lager 50 bzw. 51 befestigt, das auf dem entsprechenden Längsholm gleiten kann. Jedes Lager ist über einen Verbindungsarm 52 bzw. 53 mit dem an der betreffenden Seite des Rahmens befindlichen Zahnriemen 40 bzw. 41 verbunden.

Durch Betätigung des als Elektromotor ausgebildeten Antriebsmotors 33 können die Zahnriemen 40 und 41 in der einen oder anderen Richtung bewegt werden, da der Antriebsmotor 33 ein reversibel betreibbarer Motor ist. Da die Lager 50 und 51 der Leiste 46 jeweils mit einem der beiden Zahnriemen 40 und 41 verbunden ist, wird die Leiste 46 je nach Laufrichtung der Zahnriemen innerhalb des Rahmens 26 verfahren, wobei die Leiste 46 aus der nahe dem Querholm 27 befindlichen Ruhestellung bis zum oberen Ende des Rahmens nahe der Welle 32 verschoben werden kann. Die um feststehende Gelenke 54 und 55 verschwenkbaren Schwenkarme 47 werden über die Schwenkarme 48 mitgeschleppt, so daß die an den Schwenkarmen 47 befestigten Sauger 44 ebenfalls innerhalb des Rahmens 26 verstellt werden, damit je nach Größe des Formates der umzusetzenden Tafel oder Glasscheibe die Sauger in optimaler Anordnung zum Einsatz kommen.

Jedem Sauger 44 ist ein hier nicht dargestellter Sensor zugeordnet, der beim Einsatz der Vorrichtung und beim Heranfahren des Greifers 23 an eine Tafel oder Scheibe feststellt, ob dem betreffenden Sauger diese Tafel gegenüberliegt oder ob sich der Sauger gegebenenfalls neben der Tafel oder Scheibe befindet. Nur im erstgenannten Fall wird der Sauger aktiviert, um die Scheibe zu erfassen.

Der Sockel 1 ist mittels eines wenigstens eine feststehende Zahnstange 56 und wenigstens ein Ritzel aufweisenden Antriebes derart auf dem Gestell verfahrbar, daß ein taktförmiger Vorschub in Richtung zum nicht dargestellten Tafel-Block erfolgt, d h. in Fig. 1 nach rechts. Die Taktschritte sind so bemessen, daß der Greifer nach dem Abnehmen der jeweils vordersten Tafel vom Block um die Dicke der abgenommenen Tafel vorbewegt wird. Somit wird der Greifer stets in die günstigste Position an den Block herangefahren, bevor eine neue Tafel erfaßt und abgehoben wird.

## Patentansprüche

1. Vorrichtung zum Umsetzen von Tafeln wie Glasscheiben beispielsweise von einem aus einer Mehrzahl von aufrechtstehenden Tafeln bestehenden Block auf eine horizontale Transporteinrichtung, mit einem Sauger aufweisenden Greifer zum Erfassen und Umsetzen einzelner Tafeln,
**dadurch gekennzeichnet,**
daß der Greifer (23) rahmenförmig ausgebildet ist und mehrere Sauger (44) enthält, von denen einige über die Grundfläche des Greifers verstellbar gelagert sind, und daß der Greifer um eine horizontale Achse (11) verschwenkbar an wenigstens einem Arm (7, 8), der seinerseits um eine horizontale Achse (10) verschwenkbar ist, gelagert ist.

2. Vorrichtung nach Anspruch 1, dadurch gekennzeichnet, daß der Rahmen (26) einen Träger (46) für Sauger (44) enthält, der über die Grundfläche des Greifers (23) verschiebbar im Rahmen gelagert ist.

3. Vorrichtung nach Anspruch 1 oder 2, dadurch gekennzeichnet, daß zwischen dem verschiebbaren Träger (46) und der Grundleiste (27) des Rahmens (26) vom Träger (46) mitschleppbare Schwenkarme (47, 48), die weiteren Sauger (44) tragen, vorgesehen sind.

4. Vorrichtung nach einem der Ansprüche 1 bis 3, dadurch gekennzeichnet, daß jedem Sauger (44) ein die Aktivierung des jeweiligen Saugers bestimmender Sensor zugeordnet ist.

5. Vorrichtung nach einem der Ansprüche 1 bis 4, dadurch gekennzeichnet, daß der Greifer (23) an zwei Armen (7,8) aufgehängt ist, von denen jeder an seinen beiden Enden ein Ketten-Rad (20, 21) aufweist, über die eine gespannte Kette (19) geführt ist, die von einem hydraulischen Zylinder (12, 13) zu betätigen ist.

6. Vorrichtung nach Anspruch 5, dadurch gekennzeichnet, daß jedes Ende jeder Kette (19) jeweils an einem Ende (17, 18) einer verschiebbaren Kolbenstange (14; 15) befestigt ist, welche an beiden Enden des hydraulischen Zylinders (12; 13) aus diesem herausragt.

7. Vorrichtung nach einem der Ansprüche 1 bis 6, dadurch gekennzeichnet, daß oberhalb des Tafel-Blockes wenigstens eine Blasdüse angeordnet ist, die Blasluft auf die Oberkante des Blockes leitet.

8. Vorrichtung nach einem der Ansprüche 1 bis 7, dadurch gekennzeichnet, daß der Greifer (23) auf einem horizontal verschiebbaren Sockel (1) gelagert ist.

9. Vorrichtung nach Anspruch 8, dadurch gekennzeichnet, daß der Sockel (1) taktweise in Richtung zum Tafel-Block verschiebbar ist.
